# EUROPEAN PATENT SPECIFICATION

(11) **EP 3 916 034 B1**
(45) Date of publication and mention of the grant of the patent: **03.09.2025**
(21) Application number: 20744818.4
(22) Date of filing: 20.01.2020
(51) Int. Cl.: C08G 59/50, C09D 163/00

(54) **COMPOSITION, CURED PRODUCT, METHOD FOR MANUFACTURING CURED PRODUCT, METHOD FOR MANUFACTURING COATING FILM, AND METHOD FOR MANUFACTURING COMPOSITION**
ZUSAMMENSETZUNG, GEHÄRTETES PRODUKT, VERFAHREN ZUR HERSTELLUNG EINES GEHÄRTETEN PRODUKTS, VERFAHREN ZUR HERSTELLUNG EINES BESCHICHTUNGSFILMS UND VERFAHREN ZUR HERSTELLUNG EINER ZUSAMMENSETZUNG
COMPOSITION, PRODUIT DURCI, PROCÉDÉ DE FABRICATION DE PRODUIT DURCI, PROCÉDÉ DE FABRICATION DE FILM DE REVÊTEMENT ET PROCÉDÉ DE FABRICATION DE COMPOSITION

(30) Priority: 22.01.2019 JP 2019008314
(43) Date of publication of application: 01.12.2021
(73) Proprietor: MITSUBISHI GAS CHEMICAL COMPANY, INC., Chiyoda-ku Tokyo 100-8324 (JP)
(72) Inventor: ASAI, Ryo, Tokyo 125-8601 (JP); KIRINO, Tomoaki, Tokyo 125-8601 (JP)
(74) Representative: Müller-Boré & Partner Patentanwälte PartG mbB
(86) International application number: PCT/JP2020/001632
(87) International publication number: WO 2020/153280

(56) References cited:
- EP-A1- 3 656 766
- EP-A1- 3 696 172
- WO-A1-2015/001061
- WO-A1-2018/113599
- WO-A1-2019/017468
- JP-A- 2015 533 880
- JP-A- 2016 528 324
- HE, XIAODUN ET AL.: "Evaluation of Furfurylamines as Curing Agents for Epoxy Resins", JOURNAL OF POLYMER SCIENCE , PART A, POLYMER CHEMISTRY, vol. 30, 30 March 1992 (1992-03-30), pages 533 - 542, XP000258557

## Description

### Technical Field

The present invention relates to a composition, a cured product, a method for manufacturing a cured product, a method for manufacturing a coating film, and a method for manufacturing a composition.

### Background Art

"Epoxy resin" is a generic term for compounds having epoxy groups in the molecule, and epoxy resins typically have two or more epoxy groups. Generally, an epoxy resin hardly cures on its own upon heating and requires the addition of a curing agent for a cured product to be formed. Addition of a curing agent allows a crosslinking reaction via an epoxy group to proceed so as to produce a cured product insoluble or hardly soluble in various solvents and hardly melting.

Epoxy resins have various properties suitable for use in life and industrial use. Specifically, epoxy resins are available in various forms ranging from a low viscosity liquid to a solid, and have excellent processability. In addition, combining with various curing agents enables curing temperature to be selected from a wide range of temperatures from room temperature to high temperature, thus enhancing convenience. Furthermore, epoxy resins have a characteristic of producing only a small amount of volatiles upon curing. Cured products of epoxy resins can be selectively produced, ranging from hard to soft products, through the inclusion of a curable composition or the like. In addition, epoxy resins are excellent in various properties, such as chemical resistance, corrosion resistance, heat resistance, mechanical properties, electrical properties, and adhesion. Epoxy resins are practically used by utilizing such properties in a wide range of fields, such as in paints for civil engineering and construction, adhesives, automotive components, aircraft components, composite materials, printed circuit board materials, insulating impregnated materials for heavy electrical machinery, and sealing materials for electronic devices. In particular, along with recent increasingly diversified applications and technological sophistication, epoxy resins having various chemical structures and physical properties have been developed, and curing agents to be combined with such epoxy resins have been proposed.

Patent Document 1 describes a use of 2,5-bisaminomethylfuran as a curing agent for a resin component from an epoxy resin and a reactive diluent. In addition, Patent Document 2 describes a curable composition containing at least one epoxy resin and at least one curing agent, in which the curing agent is a compound having a specific furan structure or specific tetrahydrofuran structure having an amino group.

### Citation List

### Patent Documents

Patent Document 1: JP 2016-527384 T
Patent Document 2: WO 2014/037222

Further, WO 2015/001061 A1 describes a curable composition and a process for the manufacture of an epoxy thermoset.

### Summary of Invention

### Technical Problem

Curable compositions containing an epoxy resin described in Patent Documents 1 and 2 provide cured coating films (coatings) in their own good qualities. However, for further increasing the variety of materials and for use in other applications, materials exhibiting superior properties are required to be provided. In particular, a composition capable of providing a cured product with a high glass transition temperature is required.

To solve the problems described above, an object of the present invention is to provide a composition capable of forming a cured product with a high glass transition temperature, a cured product of the composition, a method for manufacturing a cured product, a method for manufacturing a coating film, and a method for manufacturing a composition.

### Solution to Problem

As a result of diligent research under the above problems, the present inventor found that use of a specific amine-based curing agent at a specific content ratio provides a cured product of an epoxy resin with a high glass transition temperature. Specifically, the above problems have been solved by the invention set out in the appended set of claims.

### Advantageous Effects of Invention

The composition according to the present invention provides a composition capable of forming a cured product with a high glass transition temperature, a cured product of the composition, a method for manufacturing a cured product, a method for manufacturing a coating film, and a method for manufacturing a composition.

### Description of Embodiments

Contents of the present invention will be described in detail below. In the present specification, "from ... to ..." or "of ... to ..." is used to mean that the numerical values described before and after "to" are included as the lower limit and the upper limit, respectively.

A composition of the present invention is characterized by containing an epoxy resin and 2,5-bis(aminomethyl)tetrahydrofuran (which may be hereinafter referred to as "H-AMF") as a curing agent, wherein X/Y is 1.03 or more and 1.50 or less, where, in the composition, X is the number of hydrogens directly bonded to nitrogens of amino groups contained in 2,5-bis(aminomethyl)tetrahydrofuran, and Y is the number of functional groups of epoxy groups contained in the epoxy resin.

The ratio of the equivalent of amino groups of H-AMF to the equivalent of epoxy groups is thus adjusted, and this allows the composition upon curing to provide a cured product of the epoxy resin with a high glass transition temperature. The present invention will be described in detail below.

### Ratio of epoxy resin and curing agent

In the composition of the present invention, X/Y is 1.03 or more and 1.50 or less, where X is the number of hydrogens directly bonded to nitrogens of amino groups contained in 2,5-bis(aminomethyl)tetrahydrofuran in the composition, and Y is the number of functional groups of epoxy groups contained in the epoxy resin. With such a range, a high glass transition temperature can be achieved. The content ratio (X/Y) is preferably 1.05 or more, more preferably 1.06 or more, and even more preferably 1.08 or more. The upper limit is preferably 1.40 or less, more preferably 1.20 or less, even more preferably 1.18 or less, still more preferably 1.15 or less, still even more preferably 1.14 or less, and yet more preferably 1.13 or less.

Y is the number of epoxy groups that react with H-AMF, and when the composition contains an additional curing agent other than H-AMF, the composition may further contain a compound containing an epoxy group that reacts with a functional group, such as an amino group, contained in the additional curing agent at an equivalent ratio of 1:1 in a range that does not significantly deviate from the effects of the present invention. Such a compound containing an epoxy group is preferably selected from epoxy resins described below.

### Epoxy resin

The composition according to the present invention contains an epoxy resin.

The epoxy resin typically has 2 to 10 epoxy groups per molecule, preferably has 2 to 6 epoxy groups per molecule, more preferably has 2 to 4 epoxy groups per molecule, and even more preferably has 2 epoxy groups per molecule. The epoxy group is preferably a glycidyl ether group. The epoxy resin may be a low molecular weight compound (e.g., a number average molecular weight of less than 2000) or a high molecular weight compound (polymer, e.g., a number average molecular weight of 2000 or higher). The polymer epoxy resin may be an aliphatic compound, an alicyclic compound, or a compound having an aromatic ring. **In** particular, the epoxy resin preferably has two aromatic rings and/or two six-membered aliphatic rings per molecule and more preferably has two aromatic rings per molecule. Among these, epoxy resins obtained by a reaction between epichlorohydrin and a compound having two or more reactive hydrogen atoms (e.g., a polyol) are preferred. Specifically, examples of raw materials for the epoxy resin include bisphenol A (2,2-bis(4-hydroxyphenyl)propane) or its hydride, bisphenol F (4,4'-dihydroxydiphenylmethane) or its hydride, tetrabromobisphenol A (2,2-bis(3,5-dibromo-4-hydroxyphenyl)propane) or its hydride, a novolac-type resin obtained by reacting cresol with formaldehyde, and hexahydrophthalic acid.

Examples of the epoxy resin, broadly classified, include bisphenol A-type epoxy resins or their hydrides, bisphenol F-type epoxy resins or their hydrides, bisphenol-type epoxy resins, novolac-type epoxy resins (such as phenol novolac-type epoxy resins, and cresol novolac-type epoxy resins), brominated epoxy resins (such as brominated bisphenol A-type epoxy resins), glycidyl ether-type epoxy resins (e.g., resins derived from a polyhydric alcohol, such as an alkylene oxide adduct of a polyol, and epihalohydrin), glycidyl ester-type epoxy resins, glycidyl amine-type epoxy resins, hydantoin-type epoxy resins, aliphatic epoxy resins, alicyclic epoxy resins, and phenol-type epoxy resins (such as resins derived from a polyhydric phenol, such as hydroquinone or catechol, and epihalohydrin).

The epoxy resin can be synthesized, for example, by reacting epichlorohydrin and a polyol (e.g., bisphenol A) in the coexistence of sodium hydroxide. However, in the present invention, an epoxy resin that is not derived from epihalohydrin can be also used. For example, an epoxy resin containing epoxy groups, the resin obtained by a reaction between a specific monomer and glycidyl (meth)acrylate may be used. "(Meth)acrylate" is meant to include acrylate and methacrylate.

The epoxy resin is preferably the following bisphenol A-type epoxy resin represented by Formula (1) or bisphenol F-type epoxy resin represented by Formula (2):

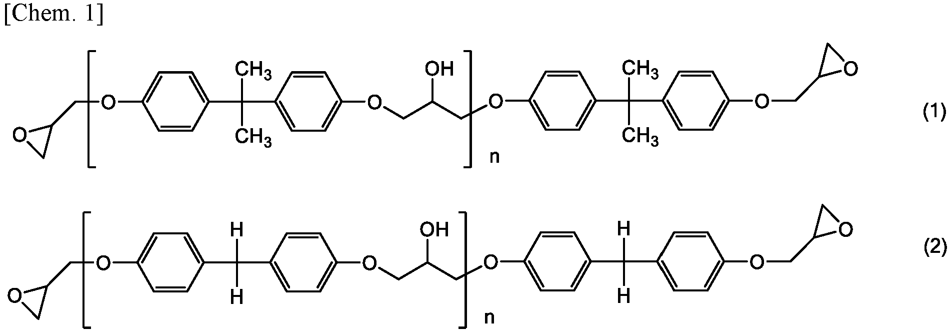

**In** the formulas, n is a number of 0 or more. For example, in Formula (1) and Formula (2), the epoxy resin with n < 0.7 (a number average molecular weight of about 700 or less) is a viscous liquid at room temperature, and the viscosity increases with more n. The epoxy resin is semi-solid with 0.8 < n < 1.8 and solid with n > 1.8.

In addition to the above, descriptions in paragraphs [0031] to [0048] of JP 2016-528324 A can be consulted for the epoxy resin.

The content of the epoxy resin in the composition is preferably 79 mass% or higher, more preferably 81 mass% or higher, and even more preferably 82 mass% or higher in the solid content not including a diluent. The upper limit is preferably 89 mass% or less, more preferably 87 mass% or less, and even more preferably 86 mass% or less.

In the total amount of the composition containing a diluent, the content of the epoxy resin is preferably 76 mass% or higher, more preferably 79 mass% or higher, and even more preferably 81 mass% or higher. The upper limit is preferably 90 mass% or less, more preferably 87 mass% or less, and even more preferably 85 mass% or less.

One or plurality of epoxy resins may be used. When a plurality of epoxy resins is used, the total amount is in the range described above.

### Curing agent

The composition of the present invention contains 2,5-bis(aminomethyl)tetrahydrofuran (H-AMF) as a curing agent. The use of such a curing agent in a predetermined ratio can further improve heat resistance of a cured product.

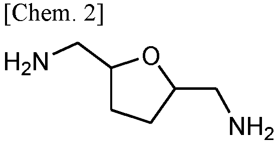

The content of H-AMF is preferably 65 mol% or higher, more preferably 75 mol% or higher, even more preferably 90 mol% or higher, still more preferably 95 mol% or higher, still even more preferably 99 mol% or higher, and yet more preferably 99.9 mol% or higher when the total of H-AMF and an additional curing agent is 100 mol%.

H-AMF is preferably synthesized from 2,5-bis(aminomethyl)furan (AMF). In addition, AMF is preferably synthesized from 5-(chloromethyl)furfural. The use of H-AMF obtained by such a synthesis method more effectively exhibits the effects of the present invention.

In the present invention, an additional curing agent may be used in combination in addition to H-AMF. The additional curing agent is exemplified by amine-based curing agents other than H-AMF (additional amine-based curing agents) and curing agents other than amine-based curing agents (non-amine-based curing agents).

Examples of the additional amine-based curing agent include 2,5-bis(aminomethyl)furan (AMF).

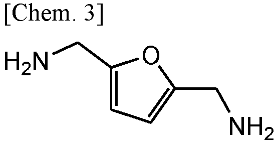

Examples of the additional amine-based curing agent other than the above that can be used include aliphatic amines, alicyclic amines, aromatic amines, heterocyclic amines other than the above. Specifically, examples of the additional amine-based curing agent that can be used include amine-based curing agents described in paragraph [0029] of JP 6177331 B and amine-based curing agents described in paragraphs [0011] to [0016] of JP 2011-213983 A.

Examples of the non-amine-based curing agent include acid anhydrides and phenolic resins. Examples of the acid anhydride include tetrahydrophthalic anhydride, hexahydrophthalic anhydride, methyltetrahydrophthalic anhydride, methylhexahydrophthalic anhydride, methyl-5-norbomene-2,3-dicarboxylic anhydride, phthalic anhydride, trimellitic anhydride, and het anhydride. Examples of the phenolic resin include novolac-type phenolic resins.

An example of an embodiment of the curing agent in the present invention includes a form in which the total amount of the amine-based curing agents (the curing agent (H-AMF) and the additional amine-based curing agent) is 90 mol% or higher when the total amount of H-AMF and the additional curing agent is 100 mol%. In the present embodiment, the total amount of the amine-based curing agents more preferably accounts for 95 mol% or higher and even more preferably accounts for 99 mol% or higher.

Another example of an embodiment of the curing agent in the present invention includes a form of the composition containing additional curing agents other than H-AMF in which the content of the additional curing agents is 10 mol% or higher when the total of H-AMF and the additional curing agents (the additional amine-based curing agent and non-amine-based curing agent) is 100 mol%. In the present embodiment, the content of the additional curing agent may be 15 mol% or higher or 20 mol% or higher. The upper limit is preferably 35 mol% or less and may be 25 mol% or less.

Yet another example of an embodiment of the curing agent in the present invention include a form configured to contain substantially no additional curing agents (additional amine-based curing agent and non-amine-based curing agent). "To contain substantially no" in the present embodiment means that the content of the additional curing agent is less than 10 mol% when the total of H-AMF and the additional curing agent is 100 mol%, and the content is preferably 5 mol% or less, more preferably 3 mol% or less, even more preferably 1 mol% or less, and still more preferably 0.1 mol% or less.

Still another example of an embodiment of the curing agent in the present invention includes a form in which the content of 2-aminomethyl-5-methyltetrahydrofuran (which may be hereinafter referred to as "MA") is 1 mol% or less relative to a total of 100 mol% of H-AMF and the additional curing agents (additional amine-based curing agent and non-amine-based curing agent).

Still yet another example of an embodiment of the curing agent in the present invention includes a form in which the content of 2,5-bis(aminomethyl)furan (AMF) is 1 mol% or less relative to a total of 100 mol% of H-AMF and the additional curing agents (additional amine-based curing agent and non-amine-based curing agent).

Yet still another example of an embodiment of the curing agent in the present invention is exemplified by a form in which the total amount of H-AMF, AMF, and the impurity MA accounts for 90 mol% or higher when the total of H-AMF and the additional curing agents (additional amine-based curing agent and non-amine-based curing agent) is 100 mol%. **In** the present embodiment, the total amount of H-AMF, AMF, and MA more preferably accounts for 95 mol% or higher and even more preferably accounts for 99 mol% or higher when the total amount of H-AMF and the additional curing agent is 100 mol%.

In addition, the curing agent may include only one additional curing agent or two or more additional curing agents. When two or more additional curing agents are contained, the total amount is preferably in the above range.

### Reactive diluent

The composition of the present invention may contain a reactive diluent.

Examples of the reactive diluent include monoepoxy-type compounds (such as alcohol-based and phenol-based), bifunctional epoxy-type compounds (polyethylene glycol-type compounds, polypropylene glycol-type compounds, neopentyl glycol-type compounds, and 1,6-hexanediol-type compounds), and trifunctional epoxy-type compounds (glycerin-type compounds and trimethylolpropane-type compounds). Specifically, examples include ethylene carbonate, vinylene carbonate, propylene carbonate, 1,4-butanediol diglycidyl ether, 1,6-hexanediol diglycidyl ether, 2-ethylhexyl glycidyl ether, neopentyl glycol diglycidyl ether, butyl glycidyl ether, allyl glycidyl ethers, C₈ to C₁₀-alkyl glycidyl ethers, C₁₂ to C₁₄-alkyl glycidyl ethers, polyoxypropylene glycol diglycidyl ethers, trimethylolpropane triglycidyl ether, glycerin triglycidyl ether, phenyl glycidyl ether, cresyl glycidyl ether, sec-butylphenyl glycidyl ether, tert-butylphenyl glycidyl ether, cardanol glycidyl ether, nonylphenyl glycidyl ethers, methylphenyl glycidyl ethers, ethylphenyl glycidyl ethers, propylphenyl glycidyl ethers, triglycidyl p-aminophenol, divinylbenzyl dioxides, dicyclopentadiene diepoxide, glycidyl neodecanoate, α-olefin epoxides, and versatic acid glycidyl ester. For the reactive diluent, descriptions in paragraphs [0015] to [0018] of JP 2016-527384 T can also be consulted.

When the composition of the present invention contains a reactive diluent, the content of the reactive diluent is preferably 30 mass% or less, more preferably 25 mass% or less, and even more preferably 20 mass% or less relative to the resin components of the composition (the epoxy resin and the optionally-used reactive diluent).

The composition of the present invention may contain only one reactive diluent or two or more reactive diluents. When two or more reactive diluents are contained, the total amount is in the above range.

### Additional component

The composition of the present invention may contain a non-reactive diluent, a curing accelerator, a plasticizer, a pigment, a dye, a filler, a release agent, a toughening agent, an antioxidant, an ultraviolet absorber, a light stabilizer, a fluidizer, a leveling agent, a defoaming agent, a flame retardant, or a thickener in a range not departing from the spirit of the present invention.

For the non-reactive diluent, a description in paragraph [0036] of JP 2011-213983 A can be consulted.

For the curing accelerator, plasticizer, dye, pigment, antioxidant, ultraviolet absorber, light stabilizer, flame retardant, filler, leveling agent, and defoaming agent, those described in paragraphs 0038 to 0046 of JP 2011-213983 A can be consulted.

### Properties of composition

The viscosity of the composition of the present invention is not particularly limited, but the viscosity at 25°C is preferably 1200 mPa·s or less, more preferably 1100 mPa·s or less, even more preferably 1000 mPa·s or less, and still more preferably 950 mPa·s or less, or may be 900 mPa·s or less. The lower limit is not particularly specified but is practically 100 mPa·s or higher. In addition, the lower limit may be 500 mPa·s or higher, 600 mPa·s or higher, 650 mPa·s or higher, or 690 mPa·s or higher according to the application. The viscosity is measured by a method described in Examples below.

The composition with the above viscosity can be easily spread into narrow portions, such as spaces between fibers.

The gelation time of the composition of the present invention is not particularly limited, but the gelation time at 80°C is preferably 20 minutes or shorter, more preferably 15 minutes or shorter, and even more preferably 12 minutes or shorter. The lower limit is not particularly specified but is practically 0.5 or longer. The gelation time is measured by a method described in Examples below.

With the above gelation time, a cured product can be obtained in a shorter time.

The composition of the present invention can be cured to form a cured product. The form of the cured product is not particularly limited but can be, for example, a molded body three-dimensionally shaped and cured, or a coating film applied to a substrate and cured.

The cured product of the composition of the present invention has a high glass transition temperature (Tg).

The Tg of the cured product is preferably 103°C or higher, more preferably 108°C or higher, even more preferably 110°C or higher, and still more preferably 115°C or higher. The upper limit of the Tg is not particularly specified but is practically 130°C or less or even 125°C or less. The method for measuring glass transition temperature is in accordance with a method described in Examples below.

### Cured product

The cured product of the present invention is formed from the composition of the present invention. The cured product is preferably a coating film.

The composition of the present invention may be applied to a method for manufacturing a cured product on a coating surface or the like. The present manufacturing method preferably includes applying the composition onto a surface of a substrate and curing the composition. More specifically, a method for manufacturing a coating film is exemplified, the method including applying the composition of the present invention onto a surface of a substrate and curing the composition.

The substrate in the present invention is meant to include plate-like substrates as well as floor materials, walls, and various articles onto which the composition of the present invention is to be applied. The coating film may be cured in a non-heated state or may be cured heating. In addition, a primer layer or the like may be provided on a surface of a floor material or the like. The coating film may be cured in the atmosphere or in a nitrogen atmosphere or the like. The curing time is not particularly limited, and, for example, for use as a coating on floors, sufficient curing time is preferably taken.

Applications of the composition of the present invention is not particularly limited, and the composition can be widely used in applications previously mentioned, such as paints for civil engineering and construction, adhesives, automotive components, aircraft components, composite materials (e.g., fiber-reinforced composite materials), printed circuit board materials, insulating impregnated materials for heavy electrical machinery, and sealing materials for electronic devices. Of these, the composition of the present invention is preferably used as a paint for civil engineering and construction and more preferably used as a coating material for floors by making the best use of the ease of curing and heat resistance.

In addition, the composition of the present invention is preferably used in applications described in paragraphs [0039] to [0043] of JP 2016-527384 A and applications described in paragraph [0048] of JP 2011-213983 A.

### Examples

The present invention will be described more specifically with reference to examples below.

### Examples 1 to 3, Comparative Examples 1 and 2

### Synthesis of AMF

A pressure-resistant autoclave was charged with 0.6 g of 5-(chloromethyl)furfural, 67 mL of THF, and 0.2 g of Raney-Ni as a catalyst, then charged with 42 g of liquid ammonia, and hydrogen pressure was increased to 4.5 MPaG. A THF-substituted Raney-Ni was used.

The mixture was then reacted with the temperature maintained at 90°C for 2 hours, and the pressure-resistant autoclave was cooled with ice water to stop the reaction.

Under an argon gas stream, the catalyst was removed by filtering the catalyst and the reaction solution, and the filtrate was measured by GC-FID. The GC-FID measurement was carried out using a GC-FID spectrometer Agilent 7820A (available from Agilent Technologies, Inc.).

### Manufacture of curing agent

A pressure-resistant autoclave was charged with 20 g of AMF, 8 g of Ru/alumina (Al₂O₃) (the amount of Ru catalyst was 5 mass%) as a catalyst, and 120 mL of tetrahydrofuran (THF) as a solvent, and then hydrogen pressure was increased to 6 MPaG. The mixture was reacted with temperature maintained at 90°C for 1 hour, and the pressure-resistant autoclave was cooled with ice-water to stop the reaction. Under an argon gas stream, the catalyst was removed by filtering the catalyst and the reaction solution, and a filtrate containing a product was obtained. The filtrate was post-concentrated, vacuum-dried, and purified by distillation under reduced pressure at a temperature of 120°C and a pressure of 1 mbar.

The composition of the resulting curing agent 1 was as follows:
H-AMF: 100 mol% 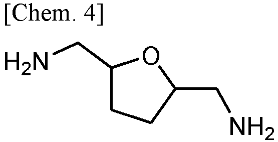
AMF: 0 mol% 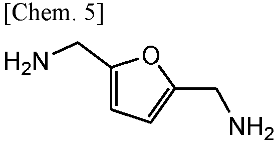
MA: 0 mol%

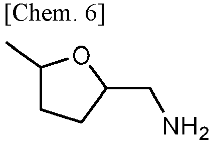

### Measurement of glass transition temperature (Tg)

Into a disposable cup, 18.60 g of an epoxy resin was weighed, and H-AMF (the curing agent obtained above) was placed in the disposable cup so that the content would be the value shown in Table 1, and they were mixed evenly with a candy stick for 1 minute. Approximately 10 mg of the stirred mixture (composition) of the amine and epoxy resin was placed in a differential scanning calorimeter (DSC) aluminum pan for liquid measurement, and the aluminum pan was tightly closed with a lid. The tightly-closed aluminum pan was set in a DSC apparatus, and the mixture was heat-cured at 120°C for 1 hour. After the temperature reached 200°C, the mixture was allowed to stand to cool to 30°C, and then the temperature was increased again from 30°C to 200°C at 5°C/min to measure the glass transition temperature.

In Examples 1 to 3 and Comparative Examples 1 and 2, jER828 (trade name), a monomer-rich liquid bisphenol A (an epoxy value of 186) available from Mitsubishi Chemical Corporation, was used as the epoxy resin.

In addition, for the DSC apparatus, a DSC7020 available from Hitachi High-Tech Science Corporation was used.

### Measurement of viscosity

Into a disposable cup, 18.60 g of the epoxy resin was weighed, and H-AMF (the curing agent obtained above) was placed in the disposable cup so that the content would be the value shown in Table 1, and they were mixed evenly with a candy stick for 1 minute. Approximately 2 cc of the stirred mixture (composition) of the amine and epoxy resin was placed in a cone plate of a type E viscometer. Measurement was started under conditions of a temperature of constant-temperature water of 25°C and a spindle rotation speed of 2.5 rpm, and viscosity 1 minute after the start of the measurement was taken as the measured value.

In Examples 1 to 3 and Comparative Examples 1 and 2, jER828 (trade name), a monomer-rich liquid bisphenol A (an epoxy value of 186) available from Mitsubishi Chemical Corporation, was used as the epoxy resin.

For the type E viscometer, a TV-22H available from Toki Sangyo Co., Ltd. was used.

The results obtained are shown below.

### Gelation time at 80°C

Into a disposable cup, 18.60 g of the epoxy resin was weighed, and H-AMF (the curing agent obtained above) was placed in the disposable cup so that the content would be the value shown in Table 1, and they were mixed evenly with a candy stick for 1 minute. The stirred mixture (composition) of H-AMF and the epoxy resin was placed into a disposable cone plate of a rotary rheometer, and the disposable cone plate and the composition were placed in an oven at 80°C of a rotary rheometer. The gap between the transducer and the disposable cone plate was immediately adjusted to 0.5 mm, and measurement was started under conditions of an angular frequency of the transducer of 10.0 rad/s. The time elapsing from the start of the measurement until the storage elastic modulus and the loss elastic modulus intersected was measured as the gelation time.

In Examples 1 to 3 and Comparative Examples 1 and 2, jER828 (trade name), a monomer-rich liquid bisphenol A (an epoxy value of 186) available from Mitsubishi Chemical Corporation, was used as the epoxy resin.

For the rotational rheometer, an ARES-G2 available from TA Instruments was used.

The results obtained are shown below.

**[Table 1]**

| | | Comparative Example 1 | Example 1 | Example 2 | Example 3 | Comparative Example 2 |
|---|---|---|---|---|---|---|
| Epoxy resin | Type | jER828 | jER828 | jER828 | jER828 | jER828 |
| Content of H-AMF | g | 3.25 | 3.41 | 3.58 | 3.74 | 6.5 |
| Content ratio | X/Y | 1.00 | 1.05 | 1.10 | 1.15 | 2.00 |
| Viscosity (25°C) | mPa·s | 1049 | 916 | 808 | 683 | Not measured |
| Tg (cured at 120°C [1 hr]) | °C | 102 | 109 | 119 | 109 | 61 |
| Gelation time at 80°C | min | 10.9 | Not measured | 11.3 | Not measured | Not measured |

In the table above, X in X/Y is the number of hydrogens directly bonded to nitrogens of amino groups contained in H-AMF, and Y is the number of functional groups of epoxy groups contained in the epoxy resin.

As is clear from the above results, when X/Y was more than 1 and 1.50 or less, high glass transition temperatures were achieved (Examples 1 to 3). In contrast, when X/Y was 1 or less, or was more than 1.5, the glass transition temperatures decreased (Comparative Examples 1 and 2). Glass transition temperature is very difficult to improve by 5°C or higher, and thus the curing of the composition of the present invention is remarkable.

Furthermore, the composition of the present invention was able to reduce viscosity (comparison of Examples 1 to 3 and Comparative Example 1).

In addition, the composition of the present invention was found to have short gelation time and excellent storage stability (comparison of Example 2 and Comparative Example 1). In particular, a significant difference of 0.4 minutes was observed between Example 2 and Comparative Example 1.

Furthermore, coating films formed from the compositions of the examples were found to have high hardness and to be excellent as coating films.

## Claims

1. A composition comprising an epoxy resin and 2,5-bis(aminomethyl)tetrahydrofuran as a curing agent, the composition satisfying X/Y being 1.03 or more and 1.50 or less, where, in the composition, X is number of hydrogens directly bonded to nitrogens of amino groups contained in 2,5-bis(aminomethyl)tetrahydrofuran, and Y is number of functional groups of epoxy groups contained in the epoxy resin.

2. The composition according to claim 1, wherein a content of 2,5-bis(aminomethyl)tetrahydrofuran is 65 mol% or higher in a total of 100 mol% of 2,5-bis(aminomethyl)tetrahydrofuran and an additional curing agent contained in the composition.

3. The composition according to claim 1 or 2, wherein a content of 2-aminomethyl-5-methyltetrahydrofuran is 1 mol% or less relative to a total of 100 mol% of 2,5-bis(aminomethyl)tetrahydrofuran and an additional curing agent contained in the composition.

4. The composition according to any one of claims 1 to 3, wherein X/Y is from 1.05 to 1.20.

5. A cured product formed from the composition described in any one of claims 1 to 4.

6. The cured product according to claim 5, wherein the cured product is a coating film.

7. A method for manufacturing a cured product, the method comprising applying a composition described in any one of claims 1 to 4 onto a surface of a substrate, and curing the composition.

8. A method for manufacturing a coating film, the method comprising applying a composition described in any one of claims 1 to 4 onto a surface of a substrate, and curing the composition.

9. A method for manufacturing a composition described in any one of claims 1 to 4, the method comprising synthesizing 2,5-bis(aminomethyl)furan using 5-(chloromethyl)furfural, and synthesizing 2,5-bis(aminomethyl)tetrahydrofuran using the 2,5-bis(aminomethyl)furan.

## Patentansprüche

1. Zusammensetzung, umfassend ein Epoxidharz und 2,5-Bis(aminomethyl)tetrahydrofuran als Härtungsmittel, wobei die Zusammensetzung ein X/Y-Verhältnis von 1,03 oder mehr und 1,50 oder weniger erfüllt, wobei in der Zusammensetzung X die Anzahl der Wasserstoffatome ist, die direkt an die Stickstoffatome der im 2,5-Bis(aminomethyl)tetrahydrofuran enthaltenen Aminogruppen gebunden sind, und Y die Anzahl der funktionellen Gruppen der im Epoxidharz enthaltenen Epoxidgruppen ist.

2. Zusammensetzung gemäß Anspruch 1, wobei der Gehalt an 2,5-Bis(aminomethyl)tetrahydrofuran 65 Mol-% oder mehr beträgt, bezogen auf insgesamt 100 Mol-% an 2,5-Bis(aminomethyl)tetrahydrofuran und einem zusätzlichen in der Zusammensetzung enthaltenen Härtungsmittel.

3. Zusammensetzung gemäß Anspruch 1 oder 2, wobei der Gehalt an 2-Aminomethyl-5-methyltetrahydrofuran 1 Mol-% oder weniger beträgt, bezogen auf insgesamt 100 Mol-% an 2,5-Bis(aminomethyl)tetrahydrofuran und einem zusätzlichen in der Zusammensetzung enthaltenen Härtungsmittel.

4. Zusammensetzung gemäß einem der Ansprüche 1 bis 3, wobei X/Y 1,05 bis 1,20 beträgt.

5. Gehärtetes Produkt, gebildet aus der in einem der Ansprüche 1 bis 4 beschriebenen Zusammensetzung.

6. Gehärtetes Produkt gemäß Anspruch 5, wobei das gehärtete Produkt ein Beschichtungsfilm ist.

7. Verfahren zur Herstellung eines gehärteten Produkts, wobei das Verfahren das Aufbringen einer in einem der Ansprüche 1 bis 4 beschriebenen Zusammensetzung auf eine Oberfläche eines Substrats und das Härten der Zusammensetzung umfasst.

8. Verfahren zur Herstellung eines Beschichtungsfilms, wobei das Verfahren das Aufbringen einer in einem der Ansprüche 1 bis 4 beschriebenen Zusammensetzung auf eine Oberfläche eines Substrats und das Härten der Zusammensetzung umfasst.

9. Verfahren zur Herstellung einer in einem der Ansprüche 1 bis 4 beschriebenen Zusammensetzung, wobei das Verfahren die Synthese von 2,5-Bis(aminomethyl)furan unter Verwendung von 5-(Chlormethyl)furfural und die Synthese von 2,5-Bis(aminomethyl)tetrahydrofuran unter Verwendung des 2,5-Bis(aminomethyl)furans umfasst.

## Revendications

1. Composition comprenant une résine époxy et du 2,5-bis(aminométhyl)tétrahydrofurane en tant qu'agent durcissant, la composition satisfaisant X/Y qui est de 1,03 ou plus et 1,50 ou moins, où, dans la composition, X est le nombre d'hydrogènes directement liés à des azotes de groupes amino contenus dans le 2,5-bis(aminométhyl)tétrahydrofurane, et Y est le nombre de groupes fonctionnels de groupes époxy contenus dans la résine époxy.

2. Composition selon la revendication 1, dans laquelle une teneur en 2,5-bis(aminométhyl)tétrahydrofurane est de 65 % en mol ou supérieure dans un total de 100 % en mol de 2,5-bis(aminométhyl)tétrahydrofurane et d'un agent durcissant supplémentaire contenu dans la composition.

3. Composition selon la revendication 1 ou 2, dans laquelle une teneur en 2-aminométhyl-5-méthyltétrahydrofurane est de 1 % en mol ou moins par rapport à un total de 100 % en mol de 2,5-bis(aminométhyl)tétrahydrofurane et d'un agent durcissant supplémentaire contenu dans la composition.

4. Composition selon l'une quelconque des revendications 1 à 3, dans laquelle X/Y va de 1,05 à 1,20.

5. Produit durci formé de la composition selon l'une quelconque des revendications 1 à 4.

6. Produit durci selon la revendication 5, dans lequel le produit durci est un film d'enrobage.

7. Procédé de fabrication d'un produit durci, le procédé comprenant appliquer une composition selon l'une quelconque des revendications 1 à 4 sur une surface d'un substrat, et durcir la composition.

8. Procédé de fabrication d'un film d'enrobage, le procédé comprenant appliquer une composition selon l'une quelconque des revendications 1 à 4 sur une surface d'un substrat, et durcir la composition.

9. Procédé de fabrication d'une composition selon l'une quelconque des revendications 1 à 4, le procédé comprenant synthétiser du 2,5-bis(aminométhyl)furane en utilisant du 5-(chlorométhyl)furfural, et synthétiser du 2,5-bis(aminométhyl)tétrahydrofurane en utilisant le 2,5-bis(aminométhyl)furane.
